# EUROPEAN PATENT SPECIFICATION

(11) **EP 3 583 326 B1**
(45) Date of publication and mention of the grant of the patent: **25.11.2020**
(21) Application number: 18713347.5
(22) Date of filing: 16.02.2018
(51) Int. Cl.: F16D 7/00, F16D 7/02, F16D 7/10

(54) **MECHANICAL PROTECTIVE CLUTCH**
MECHANISCHE SCHÜTZENDE KUPPLUNG
EMBRAYAGE MÉCANIQUE DE PROTECTION

(30) Priority: 17.02.2017 FI 20175141
(43) Date of publication of application: 25.12.2019
(73) Proprietor: Picote Solutions Oy Ltd, 06450 Porvoo (FI)
(72) Inventor: LOKKINEN, Mika, 10130 Tallinn (EE)
(74) Representative: Wilenius, Jami Juhani
(86) International application number: PCT/IB2018/050953
(87) International publication number: WO 2018/150363

(56) References cited:
- DE-B- 1 150 845
- US-A1- 2011 042 176

## Description

### FIELD OF THE INVENTION

The invention relates to a device, which prevents the transmission of force through the device, when the torsion experienced by the device exceeds a threshold value.

### PRIOR ART

Various tools have been developed for cleaning and working on the inside of pipes, such as, for example, sewer pipes that have been in use. The tools are rotated by transmitting the rotational movement of the motor shaft by a flexible shaft to the tool within the pipe. The flexible shaft must be adequately thin in order that it bends in the curves of the pipe, wherein the flexible shaft does not withstand high torsion. Specifically, as the tool suddenly jams, the torsion directed onto the flexible shaft increases, until the user has time to stop the motor. If prolonged or often repeated, the situation will cause either the damaging of the motor or the damaging and breaking of the flexible shaft. The breaking of the flexible shaft can cause extensive delays in the work to be done, because the tool remains in the pipe. The breaking of the flexible shaft is most often due to the tool jamming, thus a tool jammed in a pipe is difficult to remove, when the flexible shaft has broken. The typical power of a motor varies from less than a kilowatt to approximately five kilowatts and the rotation speed from approximately 500 revolutions per minute to approximately 3500 revolutions per minute.

There are protective clutches, which prevent the transmission of the rotation of the motor to the flexible shaft, when torsion exceeds a given threshold value. In some solutions according to prior art, the operation is based on friction surfaces pressed against each other. The friction surfaces slide on each other already before the threshold value is exceeded, which causes heat and wear. Due to wear, the threshold value is lowered and the wear rate increases. Achieving adequate durability requires the use of protective clutches of exceptionally large size, the use of which is technically demanding or, in practice, impossible. In some solutions according to prior art, a part of the protective clutch rotates as the other part remains stationary. Such a solution wears and heats up due to friction quickly when in constant use, even if the protective clutch did not activate, i.e. even if it were to function at a torsion below the threshold value.

Patent application US 2011/042176 discloses a torque limiter having recesses in interior wall of an outer sleeve. Elastic O-rings hold rolling elements in slots of a rolling element cage within the outer sleeve. A high torque applied to the torque limiter forces the rolling elements in to the recesses of the outer sleeve as the elastic O-rings elongate when force caused by the high torque is greater than elastic force of the O-ring.

German patent DE 11 50 845 B discloses a pinch roller clutch having an easily replaceable elastic element to combat wear of the elastic element.

### BRIEF DESCRIPTION OF THE INVENTION

The object of the invention is a protective clutch, which obviates the disadvantages of protective clutches according to prior art.

By using a device according to the invention, it is possible to decrease equipment failures by preventing the transmission of excessive torque from the motor shaft to the flexible shaft. Further, the usable life of a device according to the invention is longer than that of a device according to prior art.

The invention is based on a core to be fastened to one shaft, which core is placed inside a shell to be fastened to another shaft The coupling between the shell and the core is formed by the sleeves, which are arranged into the openings in the shell and the grooves in the core at corresponding sites to the openings. The sleeves are held in the grooves of the core by an elastic spring element arranged around the shell and the sleeves, wherein, at low torques, the entire protective clutch rotates together with both shafts, and there are no moving parts in relation to each other. When the torque in the protective clutch exceeds a given limit value, the force directed outward from the core onto the sleeves produces an elastic deformation ih the elastic spring element, which allows the sleeves to rise from the grooves of the core, wherein the core and the thereto-connected first shaft are able to rotate in relation to the shell and the therein-fastened second shaft. The sleeves, the openings of the shell and the elastic spring elements are encased in a casing surrounding the shell, which prevents the plastic deformations of the spring elements and assures that the sleeves remain in the openings of the shell. Using the casing substantially increases the usable life and functional reliability of the protective clutch, and also enables the use of a spring element based on elastic compression.

### BRIEF DESCRIPTION OF THE FIGURES

The invention is now described in more detail in connection with the preferred embodiments, with reference to the accompanying drawings, in which:
Fig. 1 shows the parts of a protective clutch according to one embodiment;
Fig. 2 shows a protective clutch according to one embodiment as assembled without the casing;
Fig. 3 shows a protective clutch according to one embodiment as viewed from the direction of its rotational shaft;
Fig. 4 shows a cross-section A-A of a protective clutch according to one embodiment; and
Figs. 5a-5c show different embodiments of an elastic spring element.

### DETAILED DESCRIPTION OF THE INVENTION

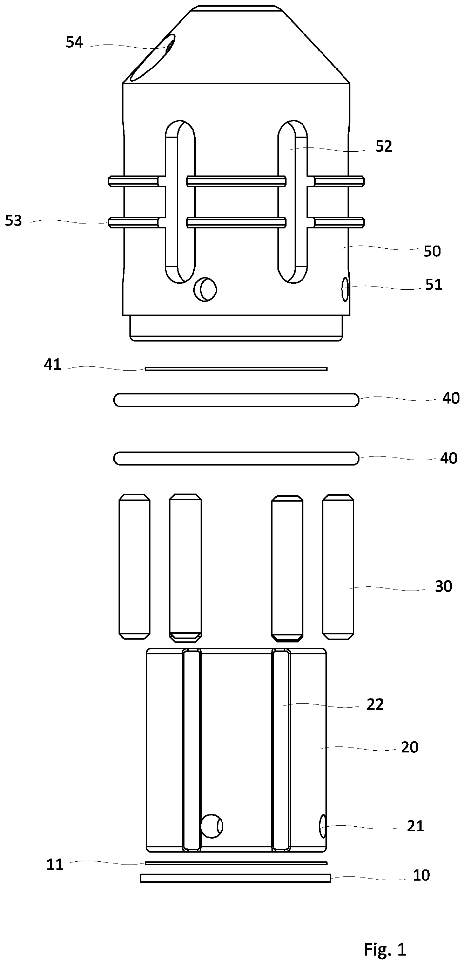

Fig. 1 shows the parts of a protective clutch according to one embodiment. The protective clutch comprises, rotationally arranged around the rotational shaft and having a round cross-section, a core 20, the outer surface of which has longitudinal grooves 22 according to Fig. 1. The grooves 22 are also parallel to the rotational shaft of the core 20. Said round cross-section is perpendicular to the direction of said grooves 22. Said round cross-section is also perpendicular to the rotational shaft of the core 20. The core 20 further comprises means 21, 23 for fastening to the first shaft, which is typically a shaft of a motor or other device producing or transmitting mechanical energy, or a shaft connected to such a shaft. The motor shaft can, for example, be connected to a bevel gear, the shaft fastened to which is fastened from its other end to the core 20 of the protective clutch. The fastening means preferably comprise, arranged symmetrically in relation to the rotational shaft of the core 20, a cavity 23 or through-hole to receive the first shaft, for example, the motor shaft, into said cavity 23. The fastening means further comprise, in a direction deviating from the direction of the rotational shaft, one or more threaded hole(s) 21 extending from the outer surface of the core 20 into said cavity 23. By screwing the retainer screw in the threaded hole 21 against the first shaft in the cavity 23, the first shaft is fastened to the core 20.

The protective clutch further comprises, rotationally arranged around the rotational shaft and having a round cross-section, a shell 50, in which is created, symmetrically in relation to the rotational shaft, a cavity for at least partially receiving the core 20 inside the shell 50. In this case, the shell 50 and the core 20 inside the shell 50 are arranged to be rotated independently of each other in relation to the same rotational shaft. In other words, the rotational movement of the core 20 is not transmitted into the rotational movement of the shell. Into the outer surface of the shell 50 are arranged openings 52 parallel to the rotational shaft, which extend into said cavity of the shell 50. Each opening 52 is arranged to receive a sleeve 30 having a round cross-section and being perpendicular to the rotational shaft, wherein the sleeves 30 in the openings 52 of the shell 50 are arranged to settle into the grooves 22 of the core 20 arranged into the cavity of the shell 50. The sleeves 30 are preferably tubular pieces, which are, in the direction of the rotational shaft, in length, for example, 50-150% the length of the core 20. The sleeves 30 may also be solid, i.e. bars, but it is preferable to aim for a lighter structure than a solid bar and this is achieved by a tubular sleeve.

The shell 50 further comprises means for fastening to the second shaft. The fastening means may comprise, for example, arranged in the shell 50 symmetrically in relation to the rotational shaft, a cavity or through-hole 55 for receiving the second shaft, for example, a flexible shaft leading to a tool to be rotated, into said cavity or through-hole 55. The cavity or through-hole 55 arranged to receive the second shaft is in the opposite end of the shell 50 from the cavity arranged for the core 20 and, in the case of a through-hole 55, the through-hole extends to the cavity arranged for the core. The fastening means further comprise, in a direction deviating from the direction of the rotational shaft, one or more threaded hole(s) 54 extending from the outer surface of the shell 50 into said cavity or through-hole 55. By screwing the retainer screw 56 in the threaded hole 54 against the second shaft in the cavity or through-hole 55, the second shaft is fastened to the shell 20.

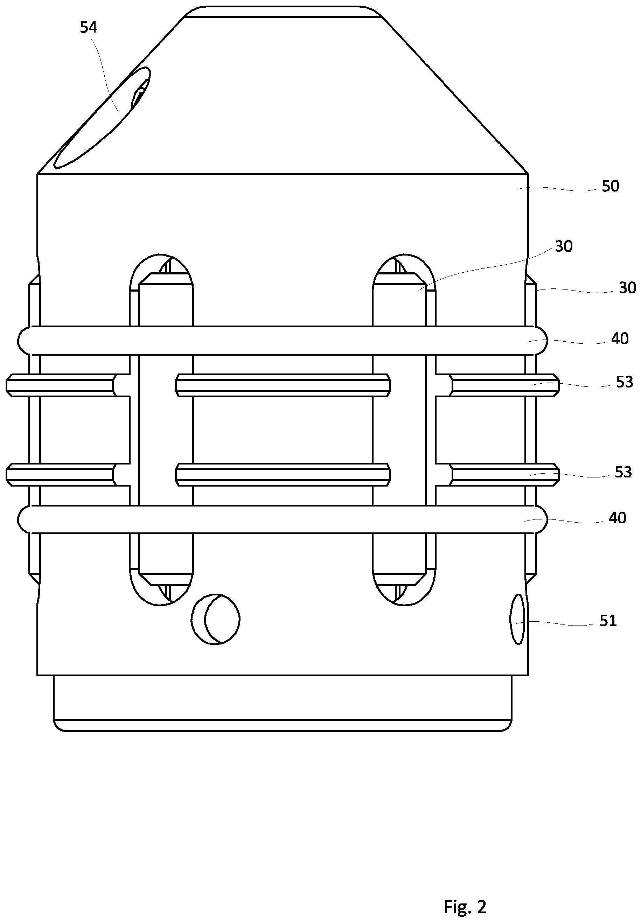

The operation of the protective clutch is based on one or more elastic spring element(s) 40 arranged around the shell 50 to hold the sleeves 30 against the core 20 arranged into the cavity of the shell 50. Such an assembled protective clutch is shown in Fig. 2. Because the surface of the core 20 has grooves 22, into which the sleeves in the openings 52 of the shell 50 are arranged to be settled, pressing the sleeves 30 against the grooves 22 causes the rotational movement of the core 20 to be transmitted through the sleeves 30 into a rotational movement of the shell 50. When the first shaft is fastened to the core and the second shaft to the shell, the rotational movement of the first shaft is transmitted into the rotational movement of the second shaft. As the core 20 is rotated, it seeks to rotate in the cavity of the shell 50 in relation to the shell. Pressed against the grooves 22 of the core, the sleeves 30 press against the wall of the openings 52 of the shell 50, which, along with the round profile of the groove 22, causes in the sleeve 30 a force, which seeks to lift the sleeve 30 from the groove. The elastic spring element 40 around the sleeves 30 and the shell 50 directs onto the sleeve an elastic force, which presses the sleeve 30 against the core 20. These opposite force components define whether the sleeve 30 remains in the groove 22, wherein the rotational movement of the core is transmitted into the rotational movement of the shell 50, or whether the sleeve 30 rises from the groove 22, wherein the sleeve 30 slides or rotates along the surface of the core 20 and the rotational movement of the core 20 is not transmitted into the rotational movement of the shell 50, i.e. the protective clutch is activated. When the protective clutch has activated, the only friction surfaces are the surfaces between the sleeve 30 and the core 20, as well as the surfaces between the sleeve and the edges of the openings 52 of the shell 50. This surface area is relatively large and the materials can be selected to withstand wear, for example, various qualities of steel can be used, wherein also the coefficient of friction is small and the device does not significantly wear or heat up. When the rotational movement of the core 20 is slowed or it is entirely stopped, the sleeves 30 settle once again into the grooves 22 of the core 20 and the rotational movement of the core is once again transmitted into the rotational movement of the shell 50. When the protective clutch rotates normally, i.e. it is not activated, the entire protective clutch rotates together with the shafts and, in practise, the protective clutch does not wear at all.

The protective clutch further has a casing to be detachably fastened around the shell, the casing being preferably composed from two or more parts, for example, from a first casing 61 and a second casing 62, which can be fastened, for example, by screws or bolts to the shell 50 through the holes 51. The casing encompasses the openings 52 of the shell 50 and the sleeves 30 set into the openings as well as the elastic spring element 40 around the sleeves 30 and the shell 50. The expansion of the elastic spring element 40 is limited by the casing, in which into the space 65 defined by the casing and the shell 50 are arranged one or more spring element(s) 40. As the protective clutch rotates, the so-called centrifugal force also seeks to lift the sleeves 30 from the grooves 22 of the core 20, but the elastic spring elements 40 cause in the sleeves 30 an opposite elastic force, which then strives to hold the sleeves 30 in the grooves 22. At high speeds of rotation, a sudden stop of the flexible shaft could cause the sleeves 30 to rise entirely out from the openings 52, if the casing 61, 62 was not used around the shell 50 to define the space, in which the sleeves 30 can move. If the sleeves 30 were to rise entirely out from the openings 52, they may remain, for example, from the other end against the outer surface of the shell 50 without settling back into the openings 52, wherein the protective clutch would no longer return to its normal operational state once the rotation of the motor ceases. By arranging the height of the space 65 defined by the shell 50 and the casing 61, 62 in the radial direction from the outer surface of the sleeve 30 in the groove 22 to the inner surface of the casing 61, 62 larger than the depth of the groove 22 allows the rising of the sleeve 30 from the groove and the activation of the protective clutch. On the other hand, by limiting the height of the space 65 defined by the shell 50 and the casing 61 in the radial direction from the outer surface of the elastic spring element 40 on top of the sleeve 30 in the groove 62 to the inner surface of the casing 61, 62 smaller than the diameter of the sleeve 30 prevents the escape of the sleeve from the opening 52 of the shell 50.

In one embodiment, onto the outer surface of the shell 50 of the protective clutch, to the area between the openings 52 of the shell 50, are arranged shoulders 53 parallel with the perimeter of the shell in order to prevent the one or more elastic spring element(s) 40 from moving. Arranged onto different sides of the shoulder 53, the elastic spring elements 40 are not able to come into contact with each other and thus cannot disturb the operation of each other. The shoulders 53, together with the casing 61, 62, further prevent the elastic spring elements 40 from turning into the wrong position and sliding off of the shell 50. The shape of the shell 50 is preferably such that the elastic spring elements 40 can be brought against the shoulder from one or both ends of the shell 50 without stretching the elastic spring element 40 further than they need to be stretched when being stationary. In other words, the diameter of the shell 50 decreases or remains constant the entire distance from the shoulder 53 to the end of the shell 50. This feature decreases the creation of permanent deformations in the elastic spring elements 40 in connection with the assembly of the protective clutch.

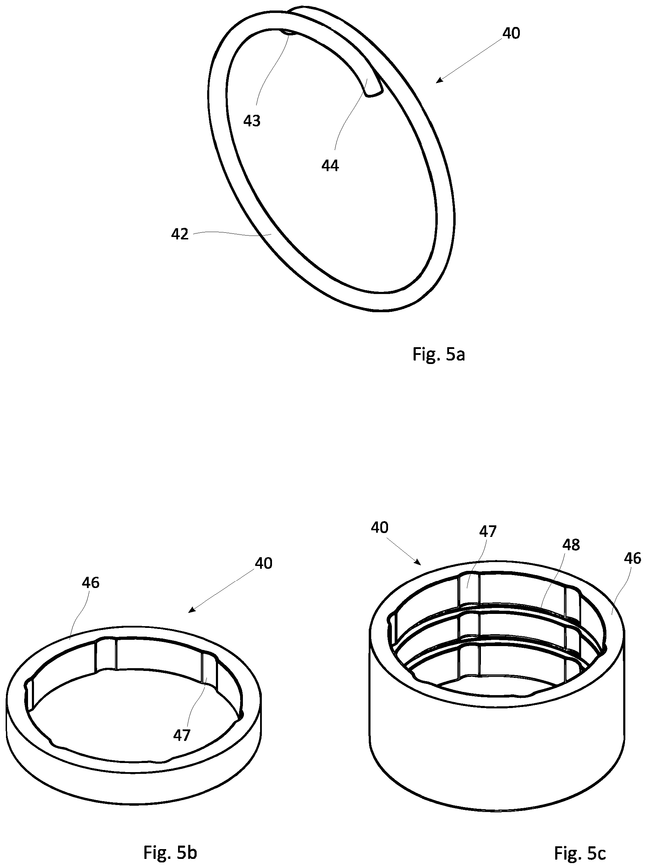

Figs. 5a-5c show the elastic spring elements 40 according to some embodiments. An elastic spring element according to the embodiment of Fig. 5a is manufactured from a steel wire 42. The steel wire is bent into the shape of a ring such that the steel wire is partially overlapping, i.e. the ring shape continues for a distance of more than one round. The outermost ends 43, 44 of the steel wire are further bent away from the shape of the ring. Both ends 43, 44 may be bent inwards, as in Fig. 5a, or they may be bent outwards. One of the ends 43 may also be bent inwards, or the other end 44 outwards from the shape of the ring. The purpose of the bent end is to increase the surface pressure of the elastic spring element against the shell 50 or casing 61, 62, wherein the elastic spring element does not yet expand under the influence of slight forces directed onto the sleeve 30. The bent end of the elastic spring element remains stationary and keeps the steel wire 42 without deformation, until the force directed onto the sleeves 30 increases as adequately great, wherein, preferably, the steel wire 42 deforms in such an extent that the sleeves 30 rise from the grooves 22 and release the core 20 to rotate in relation to the shell 50, i.e. the protective clutch activates. In this case, the steel wire becomes fatigued only as the protective clutch activates. Without the bent ends, the steel wire would always slightly deform as the load and rotation speed of the shafts change, wherein the fatigue of the steel wire would be significantly greater, which would lead to a change in the torque required to activate the protective clutch. The casing 61, 62 also serves an important function in decreasing fatigue in the steel wire 42, because the casing prevents the steel wire from significantly deforming, even in the case of high torque. The magnitude of torque required to activate the protective clutch can be adjusted by changing the number of elastic spring elements, the stiffness of the steel wire, the overlapping of the steel wire and the curvature of the outermost ends. An elastic spring element based on steel wire tolerates very high and low temperatures, thus its use is recommended especially in applications, in which the protective clutch rarely activates or in which exceptionally good heat tolerance is required.

An elastic spring element 40 according to the embodiment of Fig. 5b comprises an elastically compressible polymer forming a ring 46, to the inner surface of which are arranged grooves 47 to receive the sleeves 30 protruding from the outer surface of the shell 50. The sleeves settle into the grooves 47 and the casing preferably settles against the outer surface of the ring 46. In this case, in order to activate the protective clutch, onto the sleeves 30 in the grooves 22 of the core 20 must be directed such a great force that it compresses the ring 46 by an amount equal to the depth of the grooves, wherein the sleeves 30 rise from the grooves 22 and the core 20 is able to rotate in relation to the shell 50. Preferably, the ring is manufactured from a silicon-based polymer, by changing the hardness and size of which the magnitude of the torque required to activate the protective clutch can be adjusted. The magnitude of the torque required to activate the protective clutch can also be adjusted by changing the number of rings. A spring element based on an elastically compressible polymer does not have a fatigue tendency comparable to that of steel wire, thus an elastic spring element according to this embodiment is suitable for use especially in such applications, in which the protective clutch is frequently activated.

An elastic spring element 40 according to the embodiment of Fig. 5c comprises an elastically compressible polymer forming a ring 46, to the inner surface of which are arranged grooves 47 to receive the sleeves 30 protruding from the outer surface of the shell 50, as well as one or more groove(s) to receive the shoulders 53 of the shell 50. Preferably, the shell has shoulders on one, two or three perimeters and, correspondingly, the ring has equally as many grooves 48 for the shoulders 53. The sleeves settle into the grooves 47, the shoulders 53 settle into the grooves 48 and the casing preferably settles against the outer surface of the ring 46. Preferably, in this embodiment, the ring 46 fills entirely or at least 90% of the space 65 defined by the casing and the shell. In this case, in order to activate the protective clutch, onto the sleeves 30 in the grooves 22 of the core 20 must be directed such a great force that it compresses the ring 46 by an amount equal to the depth of the grooves 22, wherein the sleeves 30 rise from the grooves 22 and the core 20 is able to rotate in relation to the shell 50. Preferably, the ring is manufactured from a silicon-based polymer, by changing the hardness and size of which the magnitude of the torque required to activate the protective clutch can be adjusted. A spring element based on an elastically compressible polymer does not have a fatigue tendency comparable to that of steel wire, thus an elastic spring element according to this embodiment is suitable for use especially in such applications, in which the protective clutch is frequently activated.

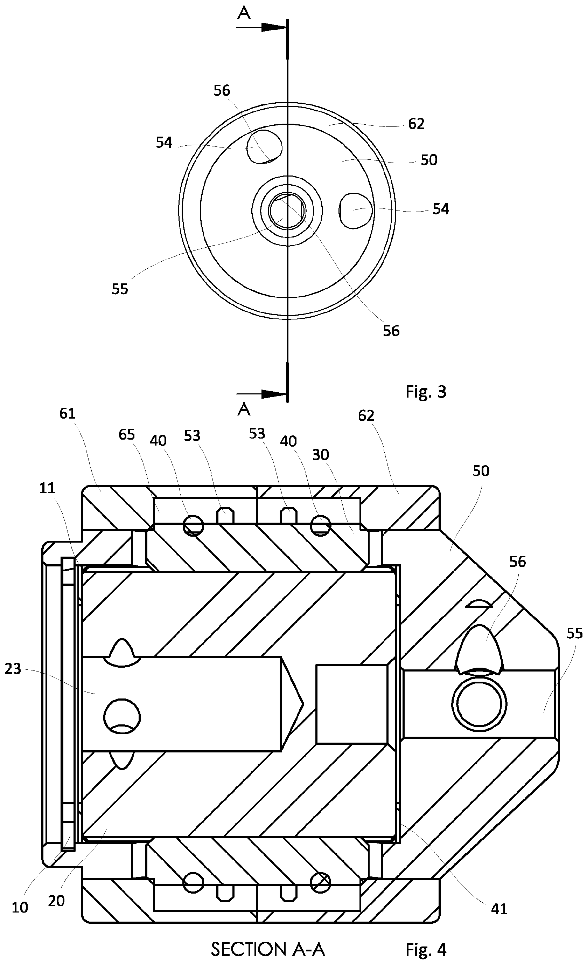

Fig. 3 shows a protective clutch according to one embodiment, as viewed from the direction of the rotational shaft, from the side of the second shaft, for example, the flexible shaft. The cross-sectional view of the section designated A-A in Fig. 3 is shown in Fig. 4. Fig. 4 shows the assembly of a protective clutch, in which the shell 50 has two shoulders 53. Between both shoulders 53 and the ends of the shell 50 are, in the vicinity of the shoulder 53, elastic spring elements 40, which are, according to the embodiment of Fig. 5a, elastic spring elements manufactured from steel wire. Into the shell 50 is arranged a cavity for receiving the core 20 in its entirety. The core 20 is arranged into the cavity as rotationally lockable by the retainer ring 10. Between the retainer ring 10 and the core 20 is a base plate 11. There is also a base plate 41 between the bottom of the cavity of the shell 50 and the end of the core 20. Into the core 20 is arranged a cavity 23 to receive and fasten by the retainer screws the first shaft into the core. Correspondingly, the shell 50 has a through-hole 55 to receive and fasten by the retainer screws 56 the second shaft into the shell. As an extension to the through-hole 55 of the shell, the core 20 has a cavity, the diameter of which is preferably greater than the diameter of the through-hole 55 of the shell, because the core 20 must rotate freely in relation to the second shaft

It is obvious to the skilled person in the art that, as technology develops, the basic idea of the invention can be implemented in various ways. The invention and its embodiments are therefore not limited to only the examples presented above, rather they may vary within the scope of the claims.

## Claims

1. A protective clutch comprising a core (20) having a round cross-section with grooves (22) on the outer surface and which core (20) comprises means (21, 23) for fastening a first shaft, the protective clutch further comprising a shell (50) having a round cross-section, which shell (50) comprises means (54, 55, 56) for fastening a second shaft, into which shell (50) is provided a cavity to receive the core (20) at least partially inside the shell (50), wherein to the outer surface of the shell (50) are arranged openings (52), which extend into said cavity of the shell (50), wherein each opening is arranged to receive a sleeve (30) having a round cross-section, wherein the sleeves (30) in the openings (52) are arranged to settle into the grooves (22) of the core (20) arranged into the cavity of the shell (50), wherein one or more elastic spring element(s) (40) are arranged around the shell (50) of the protective clutch to hold the sleeves (30) against the core (20) arranged into the cavity of the shell (50), and the expanding of the elastic spring element (40) is limited by the casing (61, 62), said one or more spring element(s) (40) being arranged into a space (65) defined by the casing (61, 62) and the shell (50), the protective clutch being **characterized in that** said elastic spring element (40) comprises elastically compressible polymer forming a ring (46), to the inner surface of which are arranged grooves (47) to receive the sleeves (30) protruding from the outer surface of the shell (50) as well as one or more groove(s) (48) to receive the shoulders (53) of the shell (50), wherein casing (61, 62) settles against the outer surface of the ring (46).

2. A protective clutch according to claim 1, wherein onto the outer surface of the shell (50), to the area between the openings (52) of the shell (50), are arranged shoulders (53) parallel with the perimeter of the shell in order to prevent the one or more elastic spring element(s) (40) from moving.

3. A protective clutch according to any one of claims 1-2, wherein the height of the space (65) defined by the shell (50) and the casing (61, 62) in the radial direction from the outer surface of the sleeve (30) in the groove (22) to the inner surface of the casing (61, 62) is larger than the depth of the groove 22, and the height of the space (65) defined by the shell (50) and the casing (61, 62) in the radial direction from the outer surface of the elastic spring element (40) on top of the sleeve (30) in the groove (62) to the inner surface of the casing (61, 62) is smaller than the diameter of the sleeve (30).

4. A protective clutch according to any one of claims 1-3, wherein into the shell (50) is provided a cavity for receiving the core (20) in its entirety, and into which cavity the core (20) is arranged as rotationally lockable by the retainer ring (10).

## Patentansprüche

1. Schutzkupplung, umfassend einen Kern (20), der einen runden Querschnitt mit Nuten (22) an der Außenfläche aufweist, und wobei der Kern (20) Mittel (21, 23) zum Befestigen einer ersten Welle aufweist, wobei die Schutzkupplung ferner einen Mantel (50) mit einem rundem Querschnitt umfasst, wobei der Mantel (50) Mittel (54, 55, 56) zum Befestigen einer zweiten Welle umfasst, wobei in dem Mantel (50) ein Hohlraum vorgesehen ist, um den Kern (20) zumindest teilweise innerhalb des Mantels (50) aufzunehmen, wobei an der Außenfläche des Mantels (50) Öffnungen (52) angeordnet sind, die sich in den Hohlraum des Mantels (50) erstrecken, wobei jede Öffnung so angeordnet ist, dass sie eine Hülse (30) mit einen runden Querschnitt aufnimmt, wobei die Hülsen (30) in den Öffnungen (52) so angeordnet sind, dass sie sich in die Nuten (22) des Kerns (20) setzen, die in dem Hohlraum des Mantels (50) angeordnet sind, wobei ein oder mehrere elastische Federelemente (40) um den Mantel (50) der Schutzkupplung angeordnet sind, um die Hülsen (30) gegen den in den Hohlraum angeordneten Kern (20) des Mantels (50) zu halten, und die Ausdehnung des elastischen Federelements (40) durch das Gehäuse (61, 62) begrenzt wird, wobei das eine oder die mehreren Federelemente (40) in einem Raum (65) angeordnet sind, der durch das Gehäuse (61, 62) und den Mantel (50) definiert ist, wobei die Schutzkupplung **dadurch gekennzeichnet ist, dass** das elastische Federelement (40) ein elastisch komprimierbares Polymer umfasst, das einen Ring (46) bildet, an dessen Innenfläche Nuten angeordnet sind (47), um die Hülsen (30) aufzunehmen, die aus der Außenfläche des Mantels (50) herausragen, sowie eine oder mehrere Nuten (48), um die Schultern (53) des Mantels (50) aufzunehmen, wobei sich das Gehäuse (61, 62) gegen die Außenfläche des Rings (46) setzt.

2. Schutzkupplung nach Anspruch 1, wobei auf der Außenfläche des Mantels (50), an dem Bereich zwischen den Öffnungen (52) dem Mantel (50), Schultern (53) parallel zum Umfang des Mantels angeordnet sind, um zu verhindern, dass sich das eine oder die mehreren elastischen Federelemente (40) bewegen.

3. Schutzkupplung nach einem der Ansprüche 1 bis 2, wobei die Höhe des Raums (65), der durch den Mantel (50) und das Gehäuse (61, 62) in radialer Richtung von der Außenfläche der Hülse (30) in der Nut (22) bis zur Innenfläche des Gehäuses (61, 62) definiert ist, größer ist als die Tiefe der Nut 22, und die Höhe des Raums (65), der durch den Mantel (50) und das Gehäuse (61, 62) in radialer Richtung von der Außenfläche des elastischen Federelements (40) oben auf der Hülse (30) in der Nut (62) bis zur Innenfläche des Gehäuses (61, 62) definiert ist, kleiner ist als der Durchmesser der Hülse (30).

4. Schutzkupplung nach einem der Ansprüche 1 bis 3, wobei in dem Mantel(50) ein Hohlraum vorgesehen ist, um den Kern (20) in seiner Gesamtheit aufzunehmen, und wobei in dem Hohlraum der Kern (20) durch den Haltering (10) drehbar verriegelbar angeordnet ist.

## Revendications

1. Manchon protecteur d'embrayage comprenant un noyau (20) comportant une section transversale ronde présentant des rainures (22) sur la surface extérieure et lequel noyau (20) comprend des moyens (21, 23) permettant de fixer un premier arbre, le manchon protecteur d'embrayage comprenant en outre une coque (50) comportant une section transversale ronde, laquelle coque (50) comprenant des moyens (54, 55, 56) permettant de fixer un second arbre, dans laquelle coque (50) est prévue une cavité permettant de recevoir le noyau (20) au moins partiellement à l'intérieur de la coque (50), des ouvertures (52) étant disposées sur la surface extérieure de la coque (50), lesquelles ouvertures s'étendant dans ladite cavité de la coque (50), chaque ouverture étant agencée pour recevoir un manchon (30) présentant une section transversale ronde, les manchons (30) des ouvertures (52) étant agencés pour reposer dans les rainures (22) du noyau (20) en étant disposés dans la cavité de la coque (50), un ou plusieurs éléments ressort élastiques (40) étant disposés autour de la coque (50) du manchon protecteur d'embrayage pour maintenir les manchons (30) contre le noyau (20) disposé dans la cavité de la coque (50), tandis que l'expansion de l'élément ressort élastique (40) est limitée par le boîtier (61, 62), lesdits un ou plusieurs élément(s) ressort(s) élastique(s) (40) étant disposé(s) dans un espace (65) défini par le boîtier (61, 62) et par la coque (50), le manchon protecteur d'embrayage étant **caractérisé en ce que** ledit élément à ressort élastique (40) comprend un polymère élastiquement compressible formant un anneau (46), sur la surface intérieure duquel sont disposées des rainures (47) permettant de recevoir les manchons (30) faisant saillie à partir de la surface extérieure de la coque (50) ainsi qu'une ou plusieurs rainure(s) (48) destinée(s) à recevoir les épaulements (53) de la coque (50), le boîtier (61, 62) reposant sur la surface extérieure de l'anneau (46).

2. Manchon protecteur d'embrayage selon la revendication 1, dans lequel, sur la surface extérieure de la coque (50), dans la zone se trouvant entre les ouvertures (52) de la coque (50), sont disposés des épaulements (53) parallèles au périmètre de la coque permettant d'empêcher le ou les élément(s) ressort(s) élastique(s) (40) de se déplacer.

3. Manchon protecteur d'embrayage selon l'une quelconque des revendications 1 à 2, dans lequel la hauteur de l'espace (65) défini par la coque (50) et par le boîtier (61, 62) dans la direction radiale à partir de la surface extérieure du manchon (30) dans la rainure (22) jusqu'à la surface intérieure du boîtier (61, 62) est supérieure à la profondeur de la rainure (22) et où la hauteur de l'espace (65) défini par a coque (50) et par le boîtier (61, 62) dans la direction radiale à partir de la surface extérieure de l'élément ressort élastique (40) au sommet du manchon (30) dans la rainure (62) jusqu'à la surface intérieure du boîtier (61, 62) est inférieure au diamètre du manchon (30).

4. Manchon protecteur d'embrayage selon l'une quelconque des revendications 1 à 3, dans lequel, dans la coque (50), une cavité est prévue pour recevoir le noyau (20) dans son intégralité, et dans laquelle cavité le noyau (20) est disposé de manière à pouvoir être verrouillé en rotation par l'anneau de retenue (10).
